# EUROPEAN PATENT SPECIFICATION

(11) **EP 2 948 694 B1**
(45) Date of publication and mention of the grant of the patent: **12.12.2018**
(21) Application number: 14707223.5
(22) Date of filing: 24.01.2014
(51) Int. Cl.: F16F 9/516

(54) **SHOCK ABSORBER DEVICE**
STOSSDÄMPFERVORRICHTUNG
DISPOSITIF D'ABSORBEUR DE CHOCS

(30) Priority: 25.01.2013 IT UD20130009
(43) Date of publication of application: 02.12.2015
(73) Proprietor: Vapsint Srl, 31010 Godega S. Urbano (IT)
(72) Inventor: PAGOTTO, Angelo, I-31010 Orsago (IT)
(74) Representative: Petraz, Gilberto Luigi
(86) International application number: PCT/IB2014/058525
(87) International publication number: WO 2014/115114

(56) References cited:
- EP-A1- 2 204 592
- WO-A1-2011/045754
- DE-A1- 19 938 249
- DE-U1-202007 012 519
- FR-A1- 2 666 857
- GB-A- 2 346 192

## Description

### FIELD OF THE INVENTION

The present invention concerns a shock absorber device suitable to cushion a mobile element with respect to a fixed element in order to prevent the former from knocking hard against the latter. The present invention is applied in particular in mechanisms for closing any door, shutter or window, either sliding or hinged, for example, but not only, in the field of doors, windows and furniture.

### BACKGROUND OF THE INVENTION

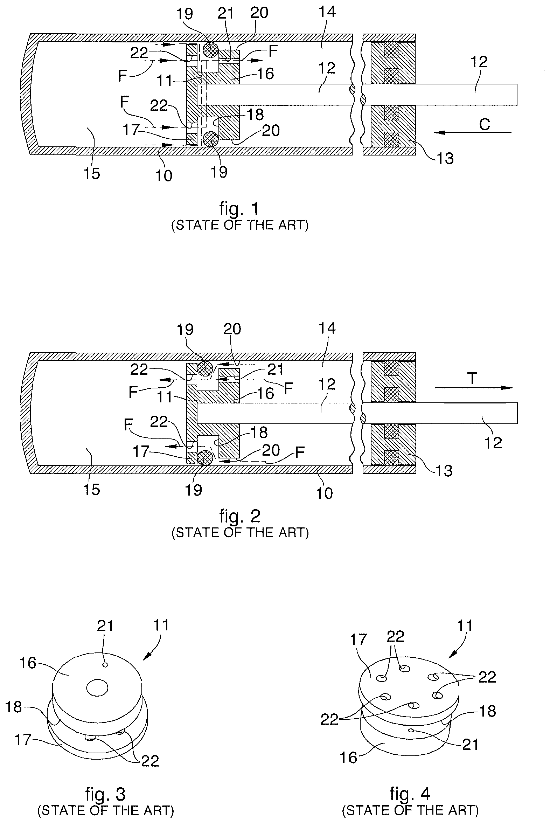

A shock absorber device is known, shown schematically in figs. 1, 2, 3 and 4 that comprises a cylinder 10 filled with a fluid, such as oil for example, and closed at the ends. Inside the cylinder 10 a piston 11 is able to slide axially, solid to a shaft 12 which acts as an actuation member and which partly exits from the cylinder 10 from one end 13 thereof. The piston 11 divides the space inside the cylinder 10 into a first zone 14, between the piston 11 and the end 13, and a second zone 15, disposed on the opposite side of the piston 11 with respect to the first zone 14.

Moreover, the piston 11 is shaped so as to have two transverse discs 16 and 17, parallel and distanced with respect to each other, that define an annular cavity 18 inside which an annular packing 19 is disposed with ample axial play. In particular, the first transverse disc 16 has an external diameter a few millimeters smaller than that of the second transverse disc 17, the external diameter of which is substantially equal to the internal diameter of the cylinder 10. In this way, between the first transverse disc 16 and the cylindrical wall of the cylinder 10 there is a peripheral passage 20. Moreover, there is a single calibrated through hole 21 on the first transverse disc 16, with an axis parallel to the longitudinal axis of the shaft 12, which puts the annular cavity 18 in communication with the first zone 14 of the cylinder 10. On the contrary, in the second transverse disc 17 there are several holes 22, six for example, with a bigger diameter than that of the single calibrated hole 21; they also have an axis parallel to the longitudinal axis of the shaft 12. The diameter of the calibrated hole 21 is chosen depending on the type of fluid and the degree of shock absorption, or braking, that is to be obtained.

In this way, when the shaft 12 is thrust further inside the cylinder 10 in a direction of compression C (fig. 1), the piston 11 is forced to slow its movement because, in order to pass from the second zone 15 to the first zone 14, the fluid is obstructed by the annular packing 19 which closes the peripheral passage 20, and it can only pass through the single calibrated hole 21.

In fact, the pressure which moves the fluid between the second zone 15 and the first zone 14 creates a fluid-dynamic flow F, substantially axial, in the opposite direction to the direction of compression C, and thus the flow expands violently at the exit from the single calibrated hole 21.

Vice versa, when the shaft 12 is pulled toward the outside of the cylinder 10 in a direction of traction T (fig. 2), opposite the direction of compression C, the annular packing 19 moves inside the annular cavity 18 and does not form any obstacle for the fluid, which can thus pass rapidly from the first zone 14 to the second zone 15 through the holes 22 of the second transverse disc 17 and the peripheral passage 20 of the first transverse disc 16.

This known shock absorber has the disadvantage however that, when the single calibrated hole 21 is very narrow, that is, its diameter is very small, in the order of a millimeter or even less, unwanted noises can be produced due to the particular hydrodynamics of the fluid which passes through it. In fact, the pressure which thrusts the fluid between the second zone 15 and the first zone 14 of the cylinder 10, creating a fluidic flow F in a direction opposite to the direction of compression C, which expands violently at the exit of the calibrated hole 21, generates turbulences which create annoying noises, such as blowing or whistling.

Moreover, the calibrated axial hole 21, which is normally very small, could become obstructed because of the presence of impurities in the fluid contained in the cylinder 10, blocking the sliding of the shaft 12.

From DE 199 38 249 A1 and EP 2.204.592 A1 shock absorbers or gas springs are also known which, instead of holes parallel to the axis of the shaft as described heretofore, use radial openings made with grooves on the body of the piston. The radial grooves are kept separate from the annular packing by a cover ring which prevents the packing from entering the groove and obstructing it due to the pressure of the fluid.

One purpose of the present invention is to obtain a shock absorber device which allows to cushion or damp the closing movement of a mobile element with respect to a fixed element, generated by a manual thrust for example, or by the action of an elastic member, such as a spring, which, as well as being safe, is reliable and, at the same time, does not produce any unwanted noise.

Another purpose of the present invention is to obtain a shock absorber device with the functions indicated above and in which there is no risk that, over time, impurities present in the fluid in transit obstruct the passage holes and compromise the functioning of the device, or in which said risk is considerably reduced.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, a shock absorber device according to the present invention, to cushion a mobile element with respect to a fixed element, comprises a cylinder closed at the ends and containing a fluid, either liquid or gaseous, and a piston sliding axially in the cylinder and connected to an actuation member which partly exits from one of the two ends of the cylinder. The piston divides the space inside the cylinder into a first zone located between the piston itself and said end, and a second zone located on the opposite side of the piston with respect to the first zone.

The piston comprises a first transverse disc and a second transverse disc, disposed parallel and distanced with respect to each other, which define an annular cavity inside which an annular packing is disposed with ample axial play.

According to one characteristic of the present invention, there is also a washer in the annular cavity, advantageously made of metal or plastic, provided with one or more radial notches on a front surface thereof.

In a preferential form of embodiment of the present invention, the radial notches are made on a front surface of the washer facing the first transverse disc.

During functioning, when the piston moves in the braking direction, the annular packing is subjected to the pressure of the fluid and, as it moves, thrusts the washer forcibly toward one of the two flat faces of one of the two transverse discs.

When the washer is in close contact with one of the flat faces of the corresponding transverse disc, radial conveying passages are created defined by the section of the notches present on the washer. The notches serve to distribute the flow of the fluid radially in the passage from the second zone to the first zone of the space inside the cylinder.

In this way, thanks to the innovative presence of the radial conveying notches on the washer, the advantage is obtained of creating an at least partly radial travel of the flow of the fluid, during compression, which does not produce any unwanted noise, while keeping the functionality and reliability of the shock absorber device unchanged.

Thanks to the solution of the present invention, when the piston moves in an opposite step to the braking step, the pressure detaches the washer from the flat surface of the transverse disc on which it is resting, and increases the size of the radial conveying notches, freeing the passage possibly obstructed by impurities present in the fluid.

In an advantageous solution of the present invention, each of the notches goes from a circular throat made near an axial hole of the washer, toward the periphery of the washer.

According to another characteristic of the present invention, each of the notches can have different travels and designs which go from the axial hole of the washer toward the periphery of the washer.

For example, the travel and design may not be rectilinear and have, for example, a fretted or spiral shape which create a progressive slowing of the speed of passage of the fluid.

### BRIEF DESCRIPTION OF THE DRAWINGS

These and other characteristics of the present invention will become apparent from the following description of some forms of embodiment, given as a non-restrictive example with reference to the attached drawings wherein:
- fig.1 is a longitudinal section of a state of the art shock absorber device in a first operating condition;
- fig. 2 is a longitudinal section of the shock absorber device in fig. 1 in a second operating condition;
- fig. 3 is a first perspective view of a detail of the shock absorber device in fig. 1;
- fig. 4 is a second perspective view of the detail in fig. 3;
- fig. 5 is a longitudinal section of a shock absorber device according to the present invention, in a first operating condition;
- fig. 6 is a longitudinal section of the shock absorber device in fig. 5 in a second operating condition;
- fig. 7 is a first perspective view of a detail of the shock absorber device in fig. 5;
- fig. 8 is a second perspective view of the detail in fig. 7;
- fig. 9 is a perspective and schematized view of a mechanism in which the shock absorber device according to the present invention is applied, shown in detail in figs. 5 to 8;
- fig. 10 is a lateral view of an enlarged detail of the mechanism in fig. 9, with the shock absorber device in a condition of maximum expansion;
- fig. 11 is a lateral view of an enlarged detail of fig. 9, with the shock absorber device in a condition of maximum compression;
- fig. 12 is a perspective view of the mechanism in fig. 9 with the shock absorber device in the condition of maximum compression.

To facilitate comprehension of the present invention, the same reference numbers have been used, where possible, to identify identical or similar common elements, both in the state of the art and in the form of embodiment according to the present invention.

### DESCRIPTION OF SOME FORMS OF EMBODIMENT OF THE PRESENT INVENTION

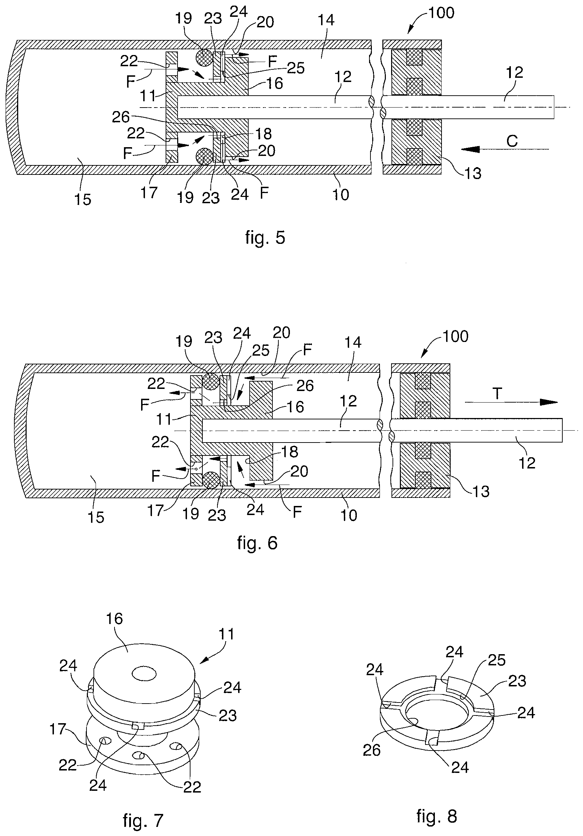

With reference to figs. 5 to 8, a shock absorber device 100 according to the present invention comprises a cylinder 10 substantially identical to that of the state of the art, also filled with a fluid, such as oil for example, and closed at the ends.

A piston 11 is able to slide axially inside the cylinder 10, and is solid to a shaft 12 that acts as an actuation member and which partly exits from the cylinder 10 from one end 13 thereof.

The piston 11 divides the space inside the cylinder 10 into a first zone 14, between the piston 11 and the end 13, and a second zone 15, disposed on the opposite side of the piston 11 with respect to the first zone 14.

Moreover, the piston 11 is shaped so as to have two transverse discs 16 and 17, parallel and distanced with respect to each other, which define an annular cavity 18 inside which an annular packing 19 is disposed with ample axial play.

Unlike the state of the art shock absorber device, in the shock absorber device 100 the annular cavity 18 is wider, that is, the distance between the two transverse discs 16 and 17 is greater, in order to house, in a new and inventive way, a washer 23, interposed between the annular packing 19 and the first transverse disc 16 (figs. 5 and 6).

The first transverse disc 16 has an external diameter a few millimeters smaller than that of the second transverse disc 17, whose external diameter is substantially equal to the internal diameter of the cylinder 10. In this way, between the first transverse disc 16 and the cylindrical wall of the cylinder 10 there is a peripheral passage 20.

The first transverse disc 16 could also have an external diameter substantially equal to the internal diameter of the cylinder 10, but in this case a plurality of transverse passages 20 would have to be created in the first transverse disc 16 so as to put the annular chamber 18 freely in communication with the first zone 14 of the cylinder 10.

The washer 23 (figs. 7 and 8) is shaped so as to have one or more radial notches or incisions 24, of which there are four in the example given here, offset by 90° with respect to each other, but there could be more or fewer of them.

The radial notches or incisions 24, thus defined since they put the center of the washer 23 in communication with its periphery, could also not have a rectilinear travel or design as shown in the drawings, but could have a fretted, spiral, inclined, angled or even other design.

In the solution shown, each radial notch 24 goes from a circular throat 25, made near an axial hole 26, toward the periphery of the washer 23.

The diameter of the axial hole 26 is a few millimeters more than the diameter of the zone of the piston 11 which defines the bottom of the annular cavity 18 (figs. 5 and 6).

According to a first variant, not shown in the drawings but easily comprehensible for the person of skill, the notches 24, rather than in the front surface of the washer 23 can be made on the surface of the first transverse disc 16 which defines the annular cavity 18.

According to a second variant, also not shown in the drawings but easily comprehensible for the person of skill, the notches 24 are made both on the front surface of the washer 23 and also on the surface of the first transverse disc 16 that defines the annular cavity 18.

The notches 24, also depending on the material with which the washer 23 is made, in particular, but not only, metal or plastic, can be made by any suitable known technique, for example by incision, molding, or chip removal.

In the second transverse disc 17, as in the state of the art, there are through holes 22, six for example.

In this way, in the shock absorber device 100, when the shaft 12 is thrust further inside the cylinder 10 in a direction of compression C (fig.5), the piston 11 is in any case forced to slow down its movement, since the fluid, in order to pass from the second zone 15 to the first zone 14, is still obstructed by the annular packing 19 which thrusts the washer 23 forcibly against the first transverse disc 16.

The fluid-dynamic flow F is however diverted radially by the radial notches 24 present in the washer 23 toward the peripheral passage 20. Laboratory tests have shown that, in this way, the shock absorber device 100 does not produce any whistling, blowing or other unwanted noise.

During the traction step, that is, when the shaft 12 is pulled toward the outside of the cylinder 10 in a direction of traction T (fig. 6), opposite the direction of compression C, the annular packing 19 and the washer 23 move freely, due to the pressure of the fluid, toward the second transverse disc 17 and do not form any obstacle for the fluid, which can thus pass rapidly from the first zone 14 to the second zone 15, through the peripheral passage 20 of the first transverse disc 16, the axial hole 26 of the washer 23 and the holes 22 of the second transverse disc 17.

Thanks to the distancing movement of the washer 23 with respect to the flat face of the first transverse disc 16, possible impurities present in the fluid and which are blocked between the two elements in the preceding compression step can be freed, thus preventing accumulations and obstructions.

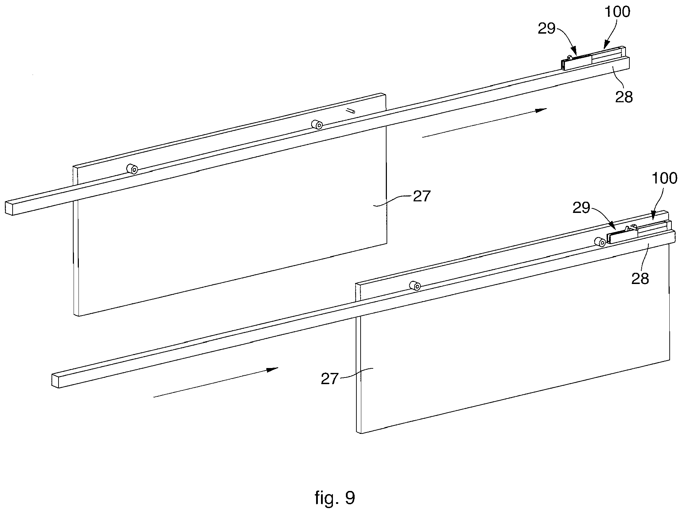

In figs. 9 to 12 the use of a shock absorber device 100 is schematically shown, to cushion a mobile element 27 with respect to a fixed element 28, in order to prevent the first from knocking hard against the second. The mobile element 27 can be any door, shutter or window, either sliding or hinged, for example, but not only, in the field of doors, windows and furniture.

The shock absorber device 100 is associated to a mechanism 29 which comprises a traction spring 30 stretched between a fixed point 31 of the fixed element 28 and a slider 32 connected to the shaft 12 and able to slide in a slot 33 by means of two pins 34.

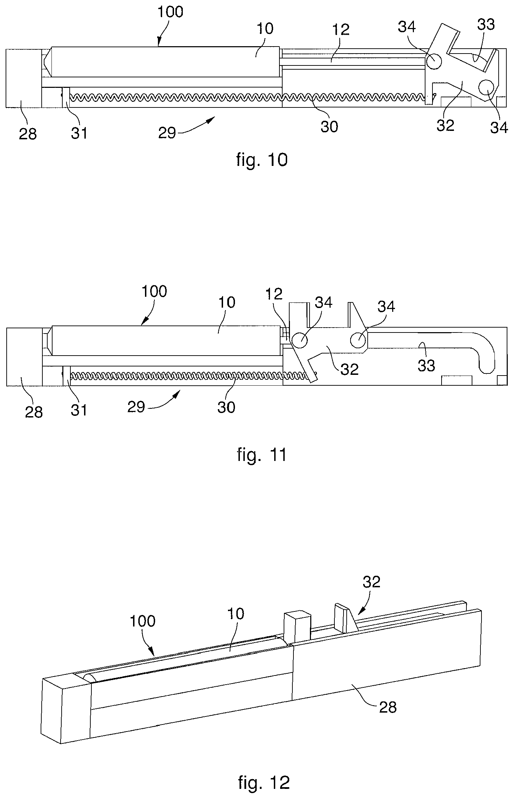

The shock absorber device 100 serves to cushion the closing movement generated by the force of the traction spring 30, from the open position, or condition of maximum expansion, shown in fig. 10, to the closed position, or maximum compression, shown in figs. 11 and 12.

It is clear that modifications and/or additions of parts may be made to the shock absorber device 100 as described heretofore, without departing from the field and scope of the present invention.

## Claims

1. Shock absorber device comprising a cylinder (10) closed at the ends and containing a fluid, a piston (11) sliding axially in said cylinder (10) and connected to an actuation member (12) which partly exits from one of the two ends (13) of said cylinder (10), wherein said piston (11) divides the space inside said cylinder (10) into a first zone (14) located between said piston (11) and said first end (13), and a second zone (15) located on the opposite side of said piston (11) with respect to said first zone (14), and wherein said piston (11) comprises a first transverse disc (16) and a second transverse disc (17) parallel and distanced with respect to each other, which define an annular cavity (18) inside which an annular packing (19) is disposed with ample axial play, **characterized in that** in said annular cavity (18), between said annular packing (19) and said first transverse disc (16), a washer (23) is also disposed provided on a front surface thereof with one or more radial notches (24) made radially in order to convey the fluid-dynamic flow (F) of said fluid in the passage from said second zone (15) to said first zone (14).

2. Shock absorber device as in claim 1, **characterized in that** said one or more radial notches (24) are made on a front surface of said washer (23) facing said first transverse disc (16).

3. Shock absorber device as in claim 1 or 2, **characterized in that** each of said notches (24) goes from a circular throat (25), made in proximity to an axial hole (26) of said washer (23), toward the periphery of said washer (23).

4. Shock absorber device as in claim 3, **characterized in that** the diameter of said axial hole (26) is at least some millimeters bigger than the diameter of the zone of said piston (11) which defines the bottom of said annular cavity (18).

5. Shock absorber device as in any claim hereinbefore, **characterized in that** said washer (23) is made of metal or plastic.

6. Shock absorber device as in any claim hereinbefore, **characterized in that** said notches (24) are obtained with one or other of the methods chosen from incision, molding or chip removal.

## Patentansprüche

1. Stoßdämpfervorrichtung, umfassend einen an den Enden verschlossenen und ein Fluid enthaltenden Zylinder (10), einen axial in dem Zylinder (10) gleitenden Kolben (11), der mit einem Betätigungselement (12) verbunden ist, welches teilweise aus einem der beiden Enden (13) des Zylinders (10) heraustritt, wobei der Kolben (11) den Raum innerhalb des Zylinders (10) in eine erste Zone (14), die sich zwischen dem Kolben (11) und dem ersten Ende (13) befindet, und eine zweite Zone (15), die sich auf der in Bezug auf die erste Zone (14) entgegengesetzten Seite des Kolbens (11) befindet, unterteilt, und wobei der Kolben (11) eine erste Querscheibe (16) und eine zweite Querscheibe (17) umfasst, die parallel und mit Abstand voneinander vorliegen und einen ringförmigen Hohlraum (18) definieren, in dem eine ringförmige Dichtung (19) mit hinreichend Axialspiel angeordnet ist, **dadurch gekennzeichnet, dass** in dem ringförmigen Hohlraum (18) zwischen der ringförmigen Dichtung (19) und der ersten Querscheibe (16) ebenso eine Unterlegscheibe (23) angeordnet ist, die auf einer Stirnfläche derselben mit einer oder mehreren radialen Einkerbung(en) (24) versehen ist, die radial ausgebildet ist/sind, um den fluiddynamischen Fluss (F) des Fluids in dem Durchgang von der zweiten Zone (15) zu der ersten Zone (14) zu befördern.

2. Stoßdämpfervorrichtung gemäβ Anspruch I, **dadurch gekennzeichnet, dass** die eine oder mehreren radiale(n) Einkerbung(en) (24) auf einer Stirnfläche der Unterlegscheibe (23), die der ersten Querscheibe (16) gegenüberliegt, ausgebildet ist/*sind.*

3. Stoßdämpfervorrichtung gemäß Anspruch 1 oder 2, **dadurch gekennzeichnet, dass** jede der Einkerbungen (24) von einer kreisförmigen Auskragung (25), die in der Nähe einer axialen Bohrung (26) der Unterlegscheibe (23) ausgebildet ist, zu der Peripherie der Unterlegscheibe (23) hin verläuft.

4. Stoßdämpfervorrichtung gemäß Anspruch 3, **dadurch gekennzeichnet, dass** der Durchmesser der axialen Bohrung (26) mindestens einige Millimeter größer ist als der Durchmesser des Bereichs des Kolbens (11), der den Boden des ringförmigen Hohlraums (18) definiert.

5. Stoßdämpfervorrichtung gemäß irgendeinem der vorhergehenden Ansprüche, **dadurch gekennzeichnet, dass** die Unterlegscheibe (23) aus Metall oder Kunststoff gefertigt ist.

6. Stoßdämpfervorrichtung gemäß irgendeinem der vorhergehenden Ansprüche, **dadurch gekennzeichnet, dass** die Einkerbungen (24) durch irgendeines der Verfahren, ausgewählt aus Einschnitt, Formung oder Zerspanung, erhalten werden.

## Revendications

1. Dispositif formant un absorbeur de chocs, comprenant un cylindre (10) fermé aux extrémités et contenant un fluide, un piston (11) coulissant axialement dans ledit cylindre (10) et relié à un organe d'actionnement (12) qui sort partiellement de l'une des deux extrémités (13) dudit cylindre (10), ledit piston (11) divisant l'espace situé à l'intérieur dudit cylindre (10) en une première zone (14) située entre ledit piston (11) et ladite première extrémité (13) et en une deuxième zone (15) située du côté opposé dudit piston (11) par rapport à ladite première zone (14), et ledit piston (11) comprenant un premier disque transversal (16) et un deuxième disque transversal (17), parallèles l'un à l'autre et à distance l'un de l'autre, qui définissent une cavité annulaire (18) à l'intérieur de laquelle un garnissage annulaire (19) est disposé avec un jeu axial ample, **caractérisé en ce que** dans ladite cavité annulaire (18), entre ledit garnissage annulaire (19) et ledit premier disque transversal (16), une rondelle (23) est également disposée sur une surface avant de celui-ci, avec une ou plusieurs encoches radiales (24) aménagées radialement afin de transporter l'écoulement fluide dynamique (F) dudit fluide dans le passage allant de ladite deuxième zone (15) à ladite première zone (14).

2. Dispositif formant un absorbeur de chocs selon la revendication 1, **caractérisé en ce que** lesdites une ou plusieurs encoches radiales (24) sont aménagées sur une surface avant de ladite rondelle (23), tournée vers ledit premier disque transversal (16).

3. Dispositif formant un absorbeur de chocs selon la revendication 1 ou la revendication 2, **caractérisé en ce que** chacune desdites encoches (24) s'étend depuis une gorge circulaire (25), aménagée à proximité d'un trou axial (26) de ladite rondelle (23), vers la périphérie de ladite rondelle (23).

4. Dispositif formant un absorbeur de chocs selon la revendication 3, **caractérisé en ce que** le diamètre dudit trou axial (26) est supérieur d'au moins quelques millimètres au diamètre de la zone dudit piston (11) qui définit le fond de ladite cavité annulaire (18).

5. Dispositif formant un absorbeur de chocs selon une revendication quelconque ci-dessus, **caractérisé en ce que** ladite rondelle (23) est faite en métal ou en plastique.

6. Dispositif formant un absorbeur de chocs selon une revendication quelconque ci-dessus, **caractérisé en ce que** lesdites encoches (24) sont obtenues par l'un ou l'autre des procédés choisis parmi l'incision, le moulage ou l'enlèvement de copeaux.
